# EUROPEAN PATENT APPLICATION

(11) **EP 1 134 544 A2**
(43) Date of publication of application: **19.09.2001**
(21) Application number: 01106258.5
(22) Date of filing: 14.03.2001
(51) Int. Cl.: G01B 21/20, B21B 5/00

(54) **Method and apparatus of measuring shape of thin metal ring and method of manufacturing it**

(30) Priority: 14.03.2000 JP 2000070230
(71) Applicant: HONDA GIKEN KOGYO KABUSHIKI KAISHA, Minato-ku Tokyo (JP)
(72) Inventor: Kanehara, Shigeru, c/o KK. Honda Gijutsu Kenkyusho, Wako-shi, Saitama-ken (JP); Arikawa, Mamoru, c/o KK. Honda Gijutsu Kenkyusho, Wako-shi, Saitama-ken (JP); Yagasaki, Tooru, c/o KK. Honda Gijutsu Kenkyusho, Wako-shi, Saitama-ken (JP)
(74) Representative: Prechtel, Jörg, Dipl.-Phys. Dr.

(57) **Abstract**

A thin metal ring manufacturing method uses a thin metal ring forming machine capable of successively forming thin metal rings, and a shape measuring apparatus for measuring the shape of a thin metal ring. The thin metal ring manufacturing method samples a sample thin metal ring from a predetermined number of thin metal rings formed successively by the thin metal ring forming machine, measures the shapes of side edges of the sample thin metal ring by the shape measuring apparatus without applying any circumferential tensile force and any transverse force to the sample thin metal ring, and adjusts the thin metal ring forming machine when the mean of measured deformations of the side edge of the sample thin metal ring differs by a value four times a standard deviation σ of the distribution of the measured deformations of the side edge of the sample thi'n metal ring from the mean of measured deformations of a side edge of a sample thin metal ring sampled by an initial sampling cycle.

## Description

### BACKGROUND OF THE INVENTION

### Field of the Invention

The present invention relates to a method of measuring the shape of a thin metal ring included in a metal belt employed in a metal belt-type nonstep variable-speed transmission and a method of manufacturing the thin metal ring.

### Description of the Related Art

When a metal belt type nonstep variable-speed transmission including a drive pulley, a driven pulley and an endless metal belt formed by engaging blocks with a layered ring formed by radially superposing thin metal rings, and extended between the drive and the driven pulley is in operation, the endless metal belt shakes laterally and the opposite side edges of the thin metal rings are pressed strongly against the side surfaces of the blocks or the side surfaces of the pulley grooves of the drive and the driven pulley when the thin metal rings are not formed accurately. Consequently, the thin metal rings are broken or undergo fatigue failure. When the thin metal rings are not formed accurately, the tensile force exerted on the endless metal belt is distributed irregularly to the individual thin metal rings and the thin metal rings undergo fatigue failure.

A method of measuring the shape of a thin metal ring proposed in JP-B No. Hei 5-50684 to avoid such problems extends a thin metal ring between a drive roller and a driven roller disposed with its axis in parallel to that of the drive roller, applies force to the shaft of the driven pulley so as to increase the center distance between the drive and the driven roller, drives the drive roller to turn the thin metal ring, brings the detecting head of a side edge detector into contact with a side edge of the thin metal ring and measures the position of the side edge of the thin metal ring at fixed short time intervals. This method measures the position of the side edge of the tensioned thin metal ring, the side edge of the thin metal ring is set straight or substantially straight by the tensile force applied to the thin metal ring and, consequently, the position of the side edge of the thin metal ring cannot be accurately measured. Furthermore, the measurement of the position of the side edge is dependent on the friction coefficient between the roller and the thin metal ring. The drive and driven roller are supported at the both ends to maintain the drive and the driven roller in parallel to each other. Therefore, either the drive roller or the driven roller must be removed from supports when putting the thin metal ring on and off the drive and the driven roller, which requires troublesome work before and after measurement. Thus, measurement cannot be accomplished efficiently in a short time.

### SUMMARY OF THE INVENTION

The present invention has been made to overcome those difficulties and relates to improvements in the method of measuring the shape of a thin metal ring.

According to a first aspect of the present invention, a shape measuring method of measuring the shape of a thin metal ring comprises the steps of: holding a thin metal ring by a holding means without applying any circumferential tensile force and any transverse force to the thin metal ring, setting a measuring member in contact with or near one side edge of the thin metal ring, and changing the position of the measuring member relative to the side edge with respect to a circumferential direction to measure the shape of the side edge. Thus, the shape of the edge or the edges of the thin metal ring in a natural state in which no external force is exerted thereon can be accurately measured.

In the shape measuring method in the first aspect of the present invention, the holding member may be kept stationary and the contact member may be moved in parallel to a datum surface of the holding means, or the holding means may be moved in a plane parallel to a datum plane including the tip of the measuring member.

According to a second aspect of the present invention, a shape measuring method of measuring the shape of a thin metal ring comprises the steps of: cutting the thin metal ring widthwise to form a thin metal strip, holding the thin metal strip on a plane by a holding means without applying any transverse force to the thin metal strip, setting a measuring member in contact with or near one side edge of the thin metal strip, and changing the position of the measuring member relative to the side edge with respect to a direction along the length of the thin metal strip to measure the shape of the side edge of the thin metal ring.

According to a third aspect of the present invention, a shape measuring apparatus for measuring the shape of a thin metal ring comprises a holding means capable of holding at least a part of the thin metal ring, and a measuring means for measuring the shape of at least one of the edges of the part of the thin metal ring held by the holding means.

According to a fourth aspect of the present invention, a thin metal ring manufacturing method employing a thin metal ring forming machine capable of successively forming thin metal rings comprises: a first step of sampling a sample thin metal ring from a predetermined number of thin metal rings formed successively by the thin metal ring forming machine, a second step of measuring the shape of the side edge of the sample thin metal ring by holding the sample thin metal ring by a holding means without applying any circumferential tensile force and any transverse force to the sample thin metal ring, setting a measuring member in contact with or near one side edge of the thin metal ring and changing the position of the measuring member relative to the side edge with respect to a circumferential direction, and a third step of adjusting the thin metal ring forming machine when a measured value indicating a deformation of the side edge of the sample thin meal ring, measured in the second step exceeds a value four times the standard deviation σ of the distribution of measured deformations of the side edge of the sample thin metal ring.

According to a fifth aspect of the present invention, a thin metal ring manufacturing method employing a thin metal ring forming machine capable of successively forming thin metal rings comprises: a first step of sampling a sample thin metal ring from a predetermined number of thin metal rings formed successively by the thin metal ring forming machine, a second step of measuring the shape of the sample thin metal ring by cutting the sample thin metal ring widthwise to form a rectangular thin metal strip, holding the rectangular thin metal strip on a plane without applying any transverse force to the rectangular thin metal strip, setting a measuring member in contact with or near one side edge of the sample thin metal strip, and changing the position of the contact member relative to the side edge with respect to a direction along the length of the rectangular thin metal strip; and a third step of adjusting the thin metal ring forming machine when a value indicating a measured deformation of the side edge of the sample thin meal ring exceeds a value four times the standard deviation σ of the distribution of measured deformations of the sample thin metal ring.

### BRIEF DESCRIPTION OF THE DRAWINGS

The above and other objects, features and advantages of the present invention will become more apparent from the following description taken in connection with the accompanying drawings, in which:
Fig. 1 is a schematic side elevation of a metal belt type nonstep variable-speed transmission provided with an endless met'al belt including thin metal rings manufactured by a thin metal ring manufacturing apparatus according to the present invention;
Fig. 2 is a fragmentary perspective view of the endless metal belt shown in Fig. 1;
Fig. 3 is a fragmentary cross-sectional view of the endless metal belt shown in Fig. 2;
Fig. 4 is a perspective view of a shape measuring apparatus in a first embodiment according to the present invention;
Fig. 5 is graph showing measured values of deformation obtained by measuring the simply curved inner side edge of a thin metal ring by the shape measuring apparatus shown in Fig. 4;
Fig. 6 is a view of assistance in explaining the meandering inner side edge of a thin metal ring;
Fig. 7 is a graph of assistance in explaining a procedure for sampling thin metal rings and measuring the shapes of the sampled thin metal rings;
Fig. 8 is a schematic side elevation of a rolling machine for forming a thin metal ring;
Fig. 9 is an enlarged view of a part of the rolling machine shown in Fig. 8;
Fig. 10 is a sectional view taken on line X-X in Fig. 9;
Fig. 11 is a development of a thin metal ring formed in a shape resembling a truncated circular cone;
Fig. 12 is a perspective view of a thin metal ring formed in a shape resembling a truncated circular cone;
Fig. 13 is a development of a thin metal ring of an irregular shape;
Fig. 14 is a perspective view of a thin metal ring of an irregular shape;
Fig. 15 is a sectional view of a layered structure formed by combining thin metal rings including those of irregular shapes;
Fig. 16 is a development of a thin metal ring of a shape resembling a cylinder having oblique ends;
Fig. 17 is a perspective view of a thin metal ring of a shape resembling a cylinder having oblique ends;
Fig. 18 is a cross sectional view of an endless metal belt formed by combining thin metal rings including those having curved side edges;
Fig. 19 is a diagram of measurements obtained by measuring the side edge of the thin metal ring shown in Fig. 14;
Fig. 20 is a plan view of a shape measuring apparatus in a second embodiment according to the present invention;
Fig. 21 is a sectional view taken on line XX1-XXI in Fig. 20;
Fig. 22 is a view taken in the direction of the arrow XXII in Fig. 20; and
Fig. 23 is a table of assistance in explaining the durability of an endless metal belt.

### DESCRIPTION OF THE PREFERRED EMBODIMENTS

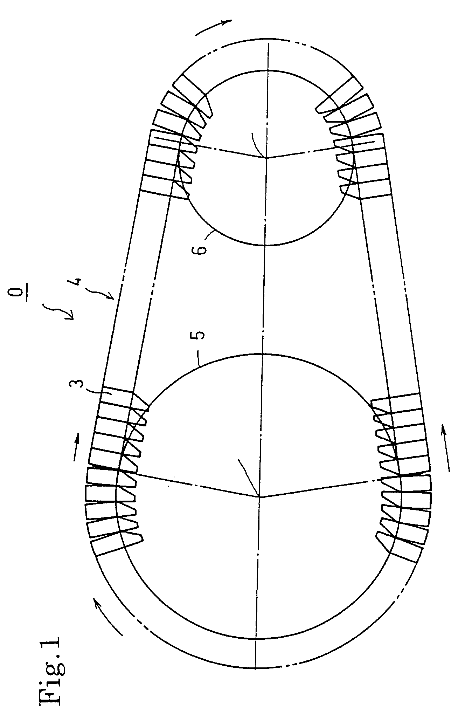

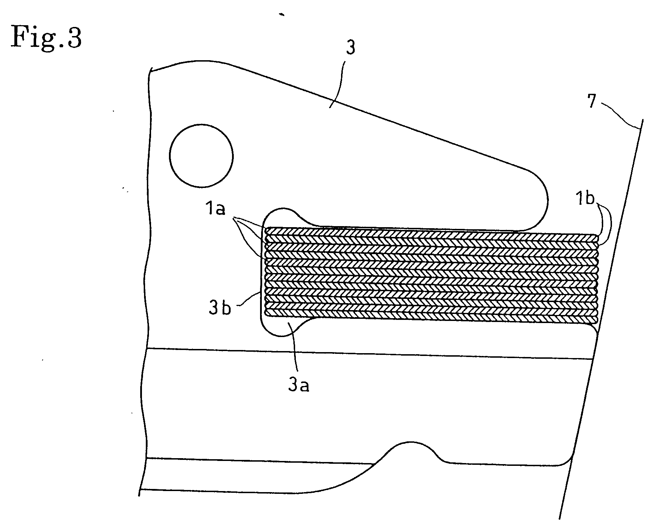

A shape measuring method in a first embodiment according to the present invention of measuring the shape of a thin metal ring will be described with reference to Figs. 1 to 10.

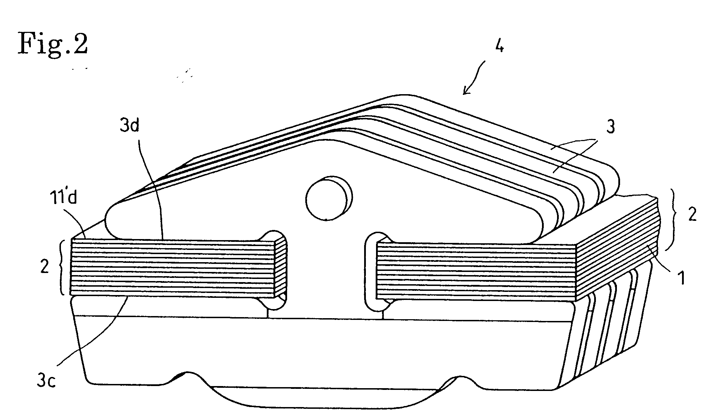

A thin metal ring 1 is, for example, about 660 mm in circumference, about 9.2 mm in width and about 0.18 mm in thickness. As shown in Fig. 2, each of a pair of layered ring structures 2 is formed by radially closely superposing twelve thin metal rings 1, and an endless metal belt 4 is formed by inserting the pair of layered ring structures 2 in slots formed in opposite side parts of metal blocks 3.

As shown in Fig. 1, a nonstep variable-speed transmission 0 has a drive pulley 5, a driven pulley 6 and the endless metal belt 4 extended between the drive pulley 5 and the driven pulley 6. The drive pulley is connected through a clutch to the output shaft of an internal combustion engine, not shown. The driven pulley 6 is connected to the input shaft of a gear type transmission, not shown, connected to a differential gear. The power of the internal combustion engine is transmitted through the clutch, the nonstep variable-speed transmission, the gear-type transmission and the differential gear, axles to right and left wheels. The clutch connects the nonstep variable-speed transmission to or disconnect the same from the output shaft of the internal combustion engine. The effective diameters of the drive pulley 5 and the driven pulley 6 are adjusted properly by controlling pressures applied to oil chambers associated with the movable parts of the drive pulley 5 and the driven pulley 6 to adjust properly the speed change ratio of the metal belt type nonstep variable transmission 0.

The inner side edge la and the outer side edge 1b of the thin metal ring 1 as developed in a flat strip must be straight and must be parallel to each other. When the side edges la and 1b of the thin metal ring 1 are curved or are not parallel to each other, parts of the inner side edge la of the thin metal ring 1 are pressed strongly against the side surfaces 3b of the slots 3a of the metal blocks 3 or parts of the outer side edge 1b of the thin metal ring are pressed strongly against the side surfaces 7 of the pulley grooves of the pulleys 5 and 6. Consequently, the durability of the side edges la and 1b of the thin metal ring are apt to be reduced and it is possible that tensile force acting on the layered ring structure 2 is not evenly distributed to the component thin metal rings 1.

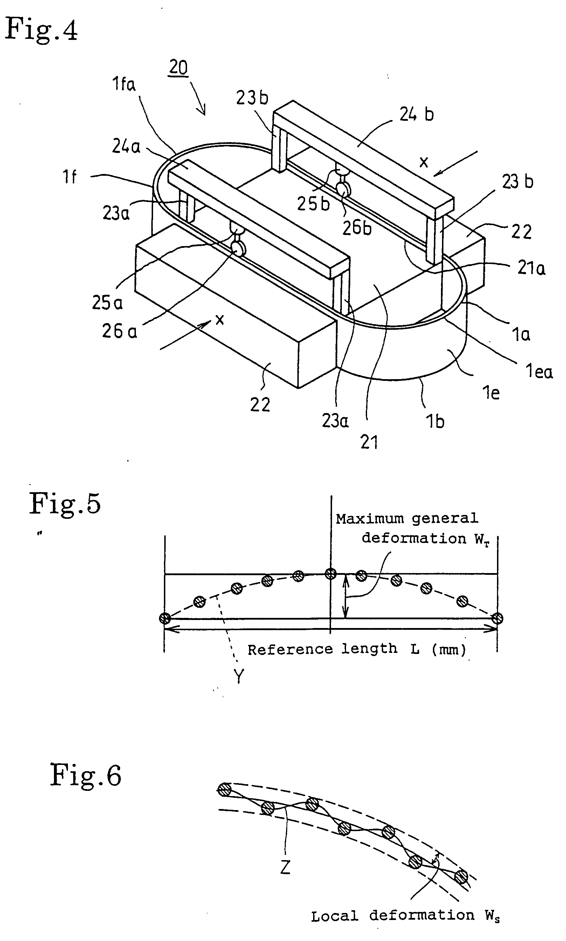

In some thin metal ring 1, the side edge la or 1b is deformed in a curve of a combination of a simple monotonous curve having deformation gradually increasing with distance from a minimum general deformation to a maximum general deformation W_{T} and gradually decreasing from the maximum general deformation W_{T} to the minimum general deformation as shown in Fig. 5 and a meandering curve alternately varying outward and inward in a local deformation W_{S} as shown in Fig. 6. It was found through experiments that the durability of the thin metal ring is reduced greatly when a total deformation W equal to the sum of the maximum deformation W_{T} and the local deformation W_{S}, i.e., the difference between a measured deformation and an approximate curve obtained by the method of least squares using measured deformations, is greater than a certain limit value.

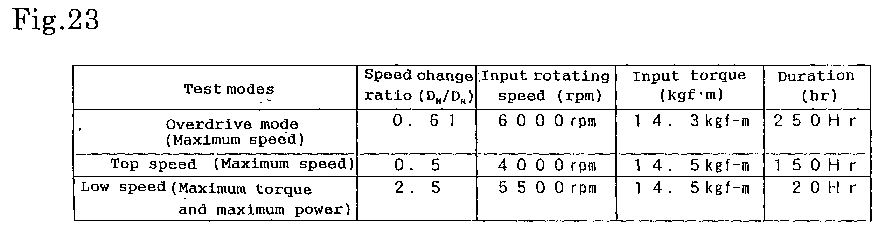

The metal ring type nonstep variable-speed transmission 0 provided with the endless metal belt 4 extended between the drive pulley 5 and the driven pulley 6 was subjected to an endurance test of a compound test mode as shown in Fig. 23. The endurance test proved that the durability of the thin metal ring 1 reduces greatly when the total deformation W of each of the inner side edge la and the outer side edge 1b of the thin metal ring 1 of 660 mm in circumference is greater than 0.6 mm, i.e., about 1/1000 of the circumference of 660 mm.

Sample rings for the measurement of the shapes of the side edges la and 1b of thin metal rings 1 are sampled every predetermined number of thin metal rings 1. Control limits for the quality control of thin metal rings 1 are determined on the basis of 4σ. If the standard deviation σ of measured deformations of the side edges of sample thin metal rings in each lot of thin metal rings is 0.075 mm, the measured deformation must be in the range of W ± 0.6 mm. Therefore, if an allowable deformation is 4σ, thin metal rings can be satisfactorily produced when the process is controlled so that the mean of measured deformations in the side edges of the sample thin metal rings is 0.6/2 mm = 0.3 mm or below.

It is hardly possible, in view of production efficiency, to measure the shapes of the side edges 1a and 1b of all the manufactured thin metal rings 1 in the thin metal ring manufacturing process. Therefore, the thin metal rings 1 are inspected by sampling inspection. To achieve the quality control of the thin metal rings 1 properly, the change of the mean of measured deformations of the sample thin metal rings sampled during a thin metal ring manufacturing process must be below four times the standard deviation σ of the measured deformations from the mean of measured deformations of the sample thin metal rings 1 sampled at the initial stage of the thin metal ring manufacturing process. Since the value of 3σ of distribution of the measured deformations of the sample thin metal rings 1 is 0.6 mm, it is preferable that limits to the change of the mean of the measured deformations is ±0.3 mm and it is preferable to readjust conditions for the thin metal ring manufacturing process when the mean of the measured deformation changes beyond ±0.3 mm from the mean of the measured deformations of the sample thin metal rings sampled at the initial stage of the thin metal ring manufacturing process.

In Figs. 5 and 6, shaded circles represent points of measurement of the general deformation W_{T} and the local deformation W_{S} and curves Y and Z are approximate curves of measured deformations determined by least square approximation.

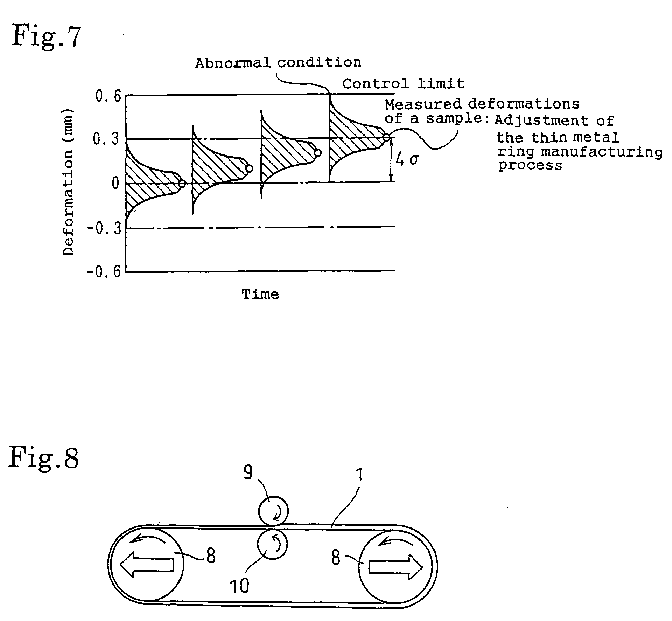

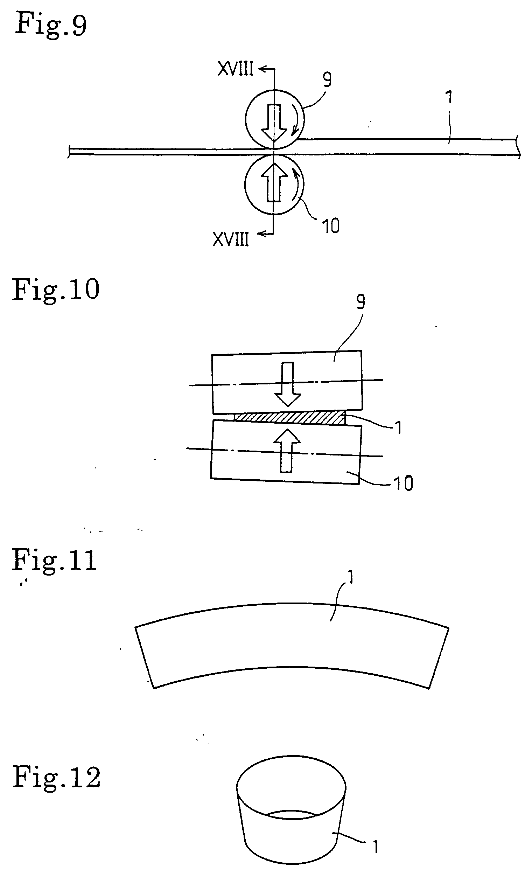

In a practical thin metal ring manufacturing process, a rectangular then steel sheet is rounded, the opposite end edges of the rounded rectangular thin steel sheet are joined together by butt welding to form a cylinder, and the cylinder is cut into metal rings . Then the metal ring is extended tautly between a pair of rollers 8, one side of the metal ring is nipped by a pair of rolling rollers 9 and 10 as shown in Fig. 8. Compressive forces are applied to the metal ring by the pair of rolling rollers 9 and 10 while the metal ring is turned by the pair of rollers 8 to form a thin metal ring 1 of a predetermined thickness and a predetermined width as shown in Fig. 10.

If the pair of rollers 9 and 10 are not set in parallel to each other as shown in Fig. 10, the opposite side parts of the metal ring are rolled in different rolling reductions, respectively, and a thin metal ring 1 having a thickness increasing from one of the opposite side edges toward the other side edge is formed. Consequently, the thin metal ring 1, which must be formed in a cylindrical shape, is formed in the shape of a truncated circular cone as shown in Fig. 12. When this thin metal ring 1 having the shape of a truncated circular cone is combined with the metal blocks 3, the thin metal ring 1 is dislocated in one transverse direction relative to the metal blocks 3, the inner side edge la touches the side surfaces 3b of the slots of the metal blocks 3 or the outer side edges 1b of the same touches the side surfaces 7 of the pulley grooves of the drive pulley 5 and the driven pulley 6, and, consequently, the thin metal ring 1 is tensioned unevenly during operation.

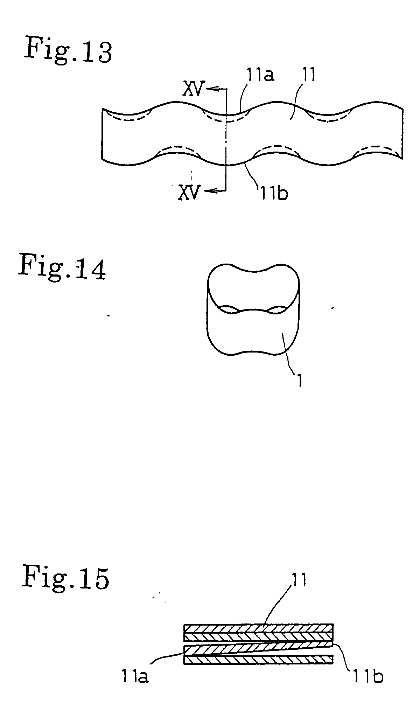

If the axis of either of the rolling rollers 9 and 10 or both the axes of the rolling rollers 9 and 10 are unstable and oscillate, the thicknesses of side edge parts near the side edges la and 1b vary at intervals along the circumference and the side edges la and 1b meander as shown in Figs. 13 and 14.

When an endless metal belt 4 formed by putting layered ring structures 2 formed by combining the thin metal rings 1 including the thin metal rings 1 having side edges 1a and 1b meandering as mentioned above and the metal blocks 3 is extended between the drive pulley 5 and the driven pulley 6 and is tensioned, the thin metal ring 1 having side edge parts respectively having periodically varying thicknesses is twisted. Consequently, the inner circumference 1'c of the innermost thin metal ring 1' is pressed strongly against the radially inner surfaces 3c of the slots 3a of the metal blocks 3, the radially outer circumference 1"d of the outermost thin metal ring 1" is pressed strongly against the radially outer surfaces 3d of the slots 3a of the metal blocks 3, and the thin metal rings are tensioned unevenly.

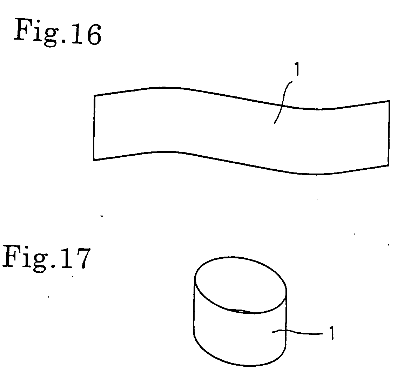

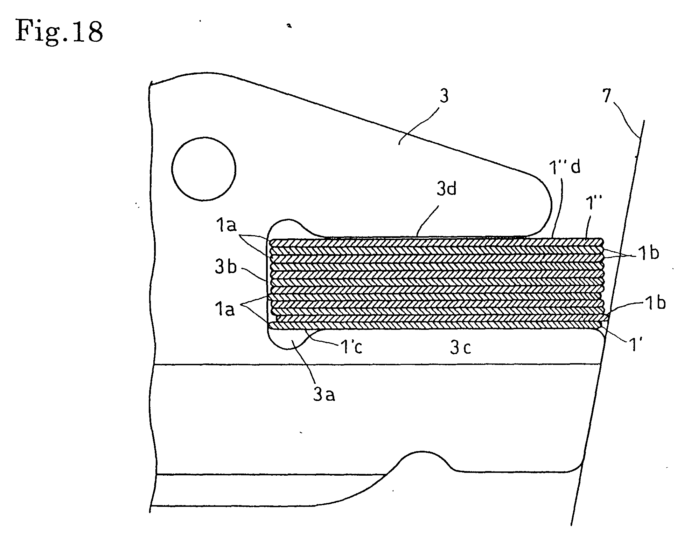

If a thin metal ring 1 is formed by rolling a metal ring obtained by obliquely cutting the cylinder of the steel sheet as shown in Fig. 17, the side edges 11a and 11b of a thin metal strip 11 obtained by laterally cutting the thin metal ring 1 and extending the same flat have a meandering shape resembling one period of a sine curve as shown in Fig. 16.

To avoid the foregoing problems , deformation in the shape of the side edges la and 1b is measured by, for example, a shape measuring apparatus 20 shown in Fig. 4, the thin metal ring manufacturing process is interrupted when the total deformation W of each of the side edges la and 1b of the thin metal ring 1 is greater than 0.3 mm and the setting and the shapes of the outer circumferences of the rolling rollers 9 and 10 are inspected and corrected so that thin metal rings having total deformation W not greater than 0.3 mm are formed.

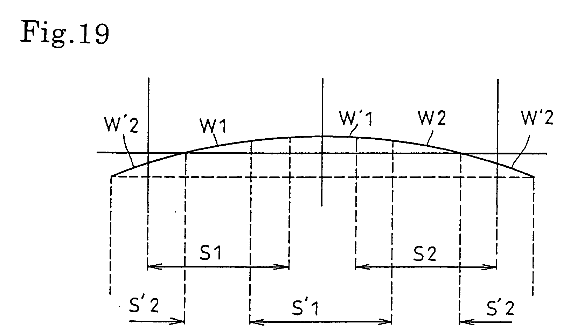

Referring to Fig. 4, the shape measuring apparatus 20 includes a base block 21 having the shape of a rectangular solid having side surfaces 21a of a length not shorter than 1/4 of the circumference of the thin metal ling 1, and a pair of pressure blocks 22 disposed on the opposite sides of the base block 21, respectively. The pressure block 22 are moved toward the side surfaces 21a of the base block 21, i.e., in the directions of the arrows X, respectively, or moved away from the side surfaces 21a of the base block 21 by actuators, not shown, respectively. Two parts of the thin metal ring 1 corresponding to the side surfaces 21a of the base block 21 are held between the base block 21 and the pair of pressure blocks 22, respectively. Posts 23a and 23b are set upright on the upper surface of the base block 21 at positions corresponding to the opposite ends of the side surfaces 21a. Guide bars 24a and 24b are supported on the posts 23a and 23b, respectively. Edge measuring devices 25a and 25b having probes 26a and 26b are supported on the guide bars 24a and 24b for longitudinal movement along the lower surfaces of the guide members 24a and 24b, respectively. The probes 26a and 26b of the edge measuring devices 25a and 25b are moved along the inner edge 1a (or the outer edge 1b) of the thin metal ring 1 to measure the shape of the inner side edge la (the outer side edge 1b) of the thin metal ring 1. Suppose that a point lea at the middle of the inner side edge la of a semicylindrical part le of the thin metal ring 1 projecting from one end of the base block 21 is the highest, a point 1fa at the middle of the inner side edge la of a semicylindrical part 1f of the thin metal ring 1 projecting from the other end of the base block 21 is the lowest and the thin metal ring 1 has the shape shown in Fig. 17. Then, a measurement W1 of a measuring range S1 of the inner side edge 1a of the thin metal ring 1 measured by the edge measuring device 25a and a measurement W2 of a measuring range S2 of the inner side edge la of the thin metal ring 1 measured by the other edge measuring device 25b vary along continuous curves as shown in Fig. 19.

After the measurement of the height of the sections S1 and S2 of the inner side edge la, the pair of pressure blocks 22 are moved away from the base block 21, the thin metal ring 1 is turned by a distance corresponding to 1/4 of the circumference of the thin metal ring 1, the pair of pressure blocks 22 are moved toward the base block 21 to hold the thin metal ring 1 between the base block 21 and the pressure blocks 22, and the aforesaid measuring procedure is repeated. Then, a measurement W'1 of a measuring range S'1 of the inner side edge la of the thin metal ring 1 measured by the edge measuring device 25a and a measurement W'2 of a measuring range S'2 of the inner side edge la of the thin metal ring 1 measured by the other edge measuring device 25b vary along continuous curves as shown in Fig. 19.

The measurement using the shape measuring apparatus 20 shown in Fig. 4 is carried out for sample thin metal rings. Since the measurement using the shape measuring apparatus 20 is nondestructive inspection, the sample thin metal rings 1 are not wasted, which is effective in reducing the cost of thin metal rings. Since any tensile force and any transverse force are not applied to the thin metal ring 1 during the measurement of the shapes of the side edges la and 1b of the thin metal ring 1, accurate, reliable measurement can be achieved.

The shapes of the side edges la and 1b of the thin metal ring 1 may be measured by a method of destructive inspection if the measurement by the method of destructive inspection is effective in reducing the cost of thin metal rings in view of the balance of cost increase due to the measurement by the method of destructive inspection and cost reduction due to the time saving effect of the measurement by the method of destructive inspection.

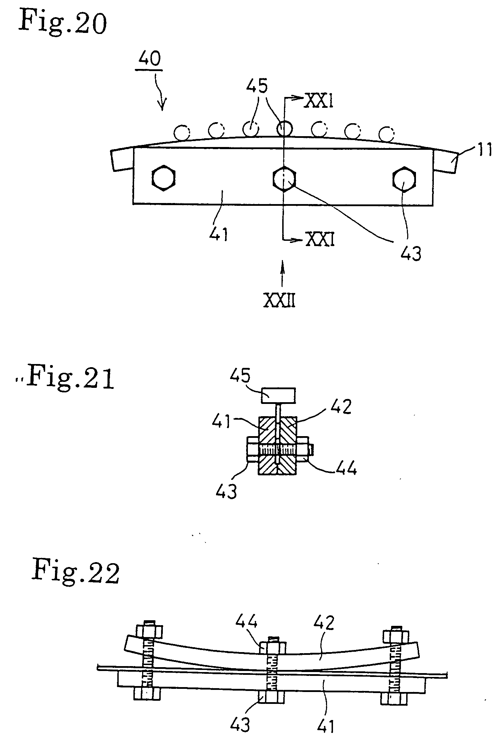

A shape measuring apparatus in a second embodiment according to the present invention will be described with reference to Figs. 20 to 22. A thin metal ring 1 is cut widthwise in a rectangular thin steel strip. A shape measuring device 40 has a straight holding block 41 and a curved holding block 42 curved in a very large radius of curvature. Bolts 43 are extended through the holding blocks 41 and 42, and nuts 44 are screwed on the bolts 43 so as to fasten together the holding blocks 41 and 42 starting from middle parts toward the end parts of the holding blocks 41 and 42. When the holding blocks 41 and 42 are thus fastened together any tensile force and any transverse force are not produced at all. A probe 45 is put into contact with the inner side edge la of a thin metal ring 1 and is moved along the inner side edge la to measure the height of the inner side edge la at positions indicated by circles in Fig. 20. Thus, the shape of the inner side edge la of the thin metal ring 1 can be very accurately measured.

When measuring the shape of a sample thin metal ring by the shape measuring apparatus 40 shown in Figs. 20 to 22, the sample thin metal ring must be cut and hence the same must be thrown away after measurement. However, the shape of the thin metal ring can be very accurately measured with high reliability by the shape measuring device 40 and the loss of the thin metal ring manufacturing process can be limited to the least extent by properly sampling thin metal rings for measurement. Thus, thin metal rings can be efficiently manufactured with high reliability.

Although the invention has been described in its preferred embodiments with a certain degree of particularity, obviously many changes and variations are possible therein. It is therefore to be understood that the present invention may be practiced otherwise than as specifically described herein without departing from the scope and spirit thereof.

A thin metal ring manufacturing method uses a thin metal ring forming machine capable of successively forming thin metal rings, and a shape measuring apparatus for measuring the shape of a thin metal ring. The thin metal ring manufacturing method samples a sample thin metal ring from a predetermined number of thin metal rings formed successively by the thin metal ring forming machine, measures the shapes of side edges of the sample thin metal ring by the shape measuring apparatus without applying any circumferential tensile force and any transverse force to the sample thin metal ring, and adjusts the thin metal ring forming machine when the mean of measured deformations of the side edge of the sample thin metal ring differs by a value four times a standard deviation σ of the distribution of the measured deformations of the side edge of the sample thin metal ring from the mean of measured deformations of a side edge of a sample thin metal ring sampled by an initial sampling cycle.

## Claims

1. A shape measuring method of measuring shape of a thin metal ring, comprising the steps of:
holding a thin metal ring by a holding means without applying any circumferential tensile force and any transverse force to the thin metal ring;
setting a measuring member in contact with or near one side edge of the thin metal ring; and
changing the position of the measuring member relative to the side edge with respect to a circumferential direction to measure the shape of the side edge.

2. The shape measuring method according to claim 1, wherein the holding means is kept stationary and the measuring member is moved in parallel to a datum surface of the holding means to measure positions of points of measurement on the side edge of the thin metal ring relative to the datum surface of the holding means.

3. The shape measuring method according to claim 1, wherein the measuring member is kept stationary, and the holding means is moved in a plane parallel to a datum plane including a tip of the measuring member to measure positions of a plurality of points of measurement on the side edge of the thin metal ring relative to the datum plane.

4. A shape measuring method of measuring shape of a thin metal ring comprising the steps of: cutting the thin metal ring widthwise to form a thin metal strip;
holding the thin metal strip by a holding means on a plane without applying any transverse force to the thin metal strip;
setting a measuring member in contact with or near one side edge of the thin metal strip; and
changing position of the measuring member relative to the side edge with respect to a direction along the length of the thin metal strip to measure a shape of the side edge of the thin metal ring.

5. The shape measuring method according to any one of claims 1 to 3, wherein a length of a range of measurement in which the measuring member is moved for measurement is shorter than a circumference of the thin metal ring, a shape of a first part of the side edge extending in the range of measurement is measured by a first measuring cycle, a position of the thin metal ring relative to the holding means is changed so that a second part of the side edge overlapping the first part of the side edge is disposed in the range of measurement, a shape of the second part of the side edge is measured by a second measuring cycle, and measured data obtained by the first and the second measuring cycle are combined to determine a shape of the entire side edge of the thin metal ring.

6. The shape measuring method according to claim 5, wherein the holding means has a single, flat holding surface.

7. A shape measuring apparatus for measuring a shape of a thin metal ring, comprising:
a holding means capable of holding at least a part of the thin metal ring; and
a measuring means for measuring a shape of one side edge of the part of the thin metal ring held by the holding means.

8. A thin metal ring manufacturing method employing a thin metal ring forming machine capable of successively forming thin metal rings, comprising:
a first step of sampling a sample thin metal ring from a predetermined number of thin metal rings formed successively by the thin metal ring forming machine;
a second step of measuring shapes of side edges of the sample thin metal ring by holding the sample thin metal ring by a holding means without applying any circumferential tensile force and any transverse force to the sample thin metal ring, setting a measuring member in contact with or near one side edge of the sample thin metal ring or setting measuring members in contact with or near opposite side edges of the sample thin metal ring, and changing the position of the measuring member relative to the side edge or positions of the measuring members relative to the side edges with respect to a circumferential direction to measure a shape of the side edge or shapes of the side edges of the sample thin metal ring; and
a third step of adjusting the thin metal ring forming machine when a total deformation determined on the basis of the measured deformations measured in the second step is greater than a predetermined limit value.

9. A thin metal ring manufacturing method employing a thin metal ring forming machine capable of successively forming thin metal rings, comprising:
a first step of sampling a sample thin metal ring from a predetermined number of thin metal rings formed successively by the thin metal ring forming machine;
a second step of measuring shapes of side edges of the sample thin metal ring by cutting the sample thin metal ring widthwise to form a rectangular thin metal strip, holding the rectangular thin metal strip on a plane, setting a measuring member in contact with or near one side edge of the thin metal strip or setting measuring members in contact with or near side edges of the thin metal strip, and changing position of the measuring member relative to the side edge or changing positions of the measuring members relative to the side edges with respect to a direction along length of the thin metal strip; and
a third step of adjusting the thin metal ring forming machine when a total deformation determine don the basis os the measured deformations measured in the second step is greater than a predetermined limit value.

10. The thin metal ring manufacturing method according to claim 1 or 2, wherein the total deformation is equal to a sum of the maximum deformation and the local deformation equal to a difference between a measured deformation and an approximate curve obtained by the method of least squares using measured deformations.
